# EUROPÄISCHE PATENTSCHRIFT

(11) **EP 1 577 428 B1**
(45) Veröffentlichungstag und Bekanntmachung des Hinweises auf die Patenterteilung: **16.08.2006**
(21) Anmeldenummer: 05002346.4
(22) Anmeldetag: 04.02.2005
(51) Int. Cl.: D03D 23/00, B60C 27/18, A63C 7/00

(54) **Gleitschutz aus einem textilen Gewebe**
Traction device made from a woven textile
Dispositif anti-dérapant fabriqué d'un tissu textile

(30) Priorität: 19.03.2004 DE 102004013532
(43) Veröffentlichungstag der Anmeldung: 21.09.2005
(73) Patentinhaber: velotex GmbH, 42929 Wermelskirchen (DE)
(72) Erfinder: Pongs, Rüdiger, 42929 Wermelskirchen (DE)
(74) Vertreter: Niemann, Uwe

(56) Entgegenhaltungen:
- WO-A-00/59745
- DE-C- 528 334
- DE-U1- 20 220 713
- FR-A- 2 186 557
- US-A1- 2002 148 525
- US-A1- 2003 089 437

## Beschreibung

Die Erfindung betrifft einen Gleitschutz aus einem textilen Gewebe. Ein gattungsgemäßer Gleitschutz als Reifenbezug zum Zwecke der Erhöhung der Reifen-Straßen-Friktion beim Fahren auf vereisten oder verschneiten Straßen ist aus der WO 00/59745 bekannt.

Dabei handelt es sich um ein Gewebe insbesondere aus Polyamidfäden. Versuche mit einem derartigen Reifenbezug waren nicht überzeugend.

Aufgabe der Erfindung ist es, einen verbesserten Gleitschutz anzugeben, der sich nicht nur als Reifenbezug, sondern auch für andere technische Zwecke eignet.

Diese Aufgabe wird gelöst mit einem Gleitschutz aus einem textilen Gewebe, welches gekennzeichnet ist durch Schußfäden, eine Bindekette (lose Kette), die mit einer Bindung 1-1 gewebt ist, durch eine Figurkette (stramme Kette), die abwechselnd mit Bindungen 2-1 und 1-2 gewebt ist, sowie durch eine Florkette, die mit einer 3-6 Schuß W-Bindung gewebt ist, wobei das Gewebe eine Noppenzahl von 25/cm² bis 60/cm² aufweist sowie aus Fäden dtex 900 bis 1.500 besteht und die Pole der Florkette in gleicher Richtung flach gelegt sind.

Vorzugsweise kann das Gewebe eine Noppenzahl von 45/cm² aufweisen. Es kann aus Fäden dtex 1.200 bestehen. Die über das Gewebe vorstehenden Pole der Florkette können eine Länge von 3 bis 8 mm aufweisen. Für die meisten Einsatzzwecke kann das Gewebe aus PA6-Fäden bestehen. Das Gewebe kann aber auch aus Mohair bestehen, wenn besonderer Wert auf antistatisch gesicherte Arbeitsabläufe gelegt wird.

Der erfindungsgemäße Gleitschutz kann als Anfahrhilfe für Kraftfahrzeuge auf verschneiten Flächen, als Besohlung unter Schuhwerk, zum Absichern von Lasten gegen Rutschen auf verschneiten Flächen, als Trägermaterial moderner Laufbänder, insbesondere wenn diese über Steigstrecken geführt sind, und dergleichen eingesetzt werden.

Die mit der Erfindung erreichten Vorteile bestehen im wesentlichen darin, daß der Gleitschutz in Florrichtung glatt ist und entgegen der Florrichtung eine extreme Bremswirkung entwickelt. Das beruht darauf, daß durch die hohe Noppenzahl ein äußerst robustes Gewebe vorliegt, bei dem der Flor die Wirkung einer Vielzahl kleiner Widerhaken hat. Da auch der Flor sehr dicht liegt, gerät beim Einsatz auf Schneeflächen kein Schnee zwischen die Noppen und auch Wasser oder Feuchtigkeit haben keine negativen Auswirkungen auf die Eigenschaften des Gleitschutzes.

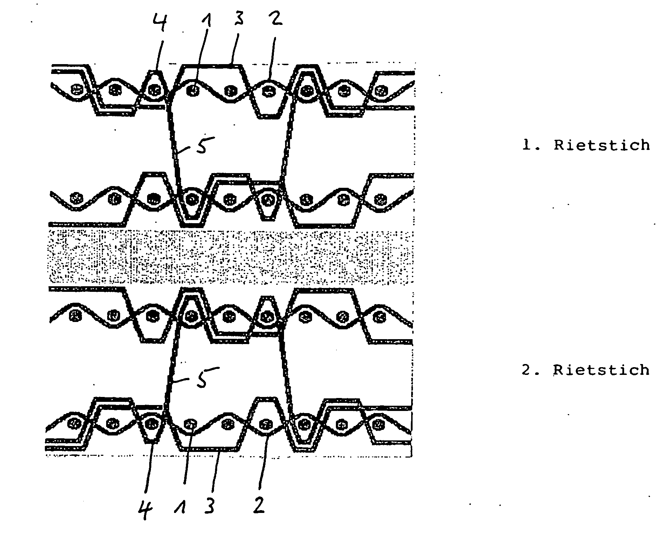

Im folgenden wird ein in der Zeichnung dargestelltes Ausführungsbeispiel der Erfindung erläutert; die einzige Figur zeigt einen Gewebeschnitt.

In der Zeichnung erkennt man ein Doppelgewebe mit Schußfäden 1 und einer darin eingebundenen Bindekette 2 (lose Kette), die mit einer Bindung 1-1 gewebt ist. Ferner ist eine Figurkette 3 als stramme Kette abwechselnd mit Bindungen 2-1 und 1-2 eingebunden. Schließlich ist auch eine Florkette 4 mit einer 3-6 Schuß W-Bindung eingebunden.

Das Gewebe weist eine Noppenzahl von 45/cm² auf, sowohl die Schußfäden 1 als auch die Ketten 2, 3, 4 bestehen aus PA6-Fäden.

Das Doppelgewebe wird wie üblich aufgeschnitten, so daß jede einzelne Gewebebahn einseitig von der Florkette 4 gebildete Pole aufweist. Durch geeignete Ausrüstung werden die Pole 5 alle in gleicher Richtung flach gelegt und in dieser Flachlage permanent gemacht. Damit wird ein Aufstehen der Pole bei Nässe und Feuchtigkeit ausgeschlossen.

## Patentansprüche

1. Gleitschutz aus einem textilen Gewebe, **gekennzeichnet durch** Schußfäden (1), eine Bindekette (2) (lose Kette), die mit einer Bindung 1-1 gewebt ist, **durch** eine Figurkette (3) (stramme Kette), die abwechselnd mit Bindungen 2-1 und 1-2 gewebt ist, sowie **durch** eine Florkette (4), die mit einer 3-6 Schuß W-Bindung gewebt ist, wobei das Gewebe eine Noppenzahl von 25/cm² bis 60/cm² aufweist sowie aus Fäden dtex 900 bis 1.500 besteht und die Pole (5) der Florkette (4) in gleicher Richtung flach gelegt sind.

2. Gleitschutz nach Anspruch 1, **dadurch gekennzeichnet, daß** das Gewebe eine Noppenzahl von 45/cm² aufweist.

3. Gleitschutz nach Anspruch 1 oder 2, **gekennzeichnet durch** Fäden dtex 1.300.

4. Gleitschutz nach einem der Ansprüche 1 bis 3, **dadurch gekennzeichnet, daß** die Länge der über das Gewebe vorstehenden Pole (5) der Florkette (4). 3 bis 8 mm beträgt.

5. Gleitschutz nach einem der Ansprüche 1 bis 4, **gekennzeichnet durch** PA6-Fäden.

6. Gleitschutz nach einem der Ansprüche 1 bis 4, **gekennzeichnet durch** eine Ausführung in Mohair.

## Claims

1. Anti-slip protection of a textile woven material, **characterised by** weft threads (1), a binding warp (2) (loose warp) woven with a binding 1-1, a fancy warp (3) (tight warp), woven in alternation with bindings 2-1 and 1-2, and a face warp (4) woven with a 3-6 weft W-binding, wherein the woven fabric has a beat-up of 25/cm² to 60/cm² as well as consists of threads dtex 900 to 1,500 and the piles (5) of the face warp (4) are laid flat in the same direction.

2. Anti-slip protection according to claim 1, **characterised in that** the fabric has a beat-up of 45/cm².

3. Anti-slip protection according to claim 1 or 2, **characterised by** threads dtex 1,300.

4. Anti-slip protection according to one of claims 1 to 3, **characterised in that** the length of the piles (5), which protrude beyond the woven material, of the face warp (4) amount to 3 to 8 mm.

5. Anti-slip protection according to one of claims 1 to 4, **characterised by** PA6 threads.

6. Anti-slip protection according to one of claims 1 to 4, **characterised by** construction in mohair.

## Revendications

1. Dispositif anti-dérapant composé d'un tissu textile, **caractérisé par** des fils de trame (1), par une chaîne de liage (2) (chaîne libre) qui est tissée avec une armure 1-1, par une chaîne façonnée (3) (chaîne rigide) qui est tissée alternativement en armure 2-1 et 1-2, ainsi que par une chaîne de poil (4) qui est tissée avec une armure trame en W 3-6, le tissu présentant un nombre de boutons compris entre 25/cm² et 60/cm² et étant composé de fils de 900 à 1500 dtex, et les poils (5) de la chaîne de poil (4) étant couchés dans le même sens.

2. Dispositif anti-dérapant selon la revendication 1, **caractérisé en ce que** le tissu présente un nombre de boutons de 45/cm².

3. Dispositif anti-dérapant selon la revendication 1 ou 2, **caractérisé par** des fils de 1300 dtex.

4. Dispositif anti-dérapant selon l'une des revendications 1 à 3, **caractérisé en ce que** la longueur des poils (5) de la chaîne de poil (4) qui dépassent du tissu est comprise entre 3 et 8 mm.

5. Dispositif anti-dérapant selon l'une des revendications 1 à 4, **caractérisé par** des fils PA6.

6. Dispositif anti-dérapant selon l'une des revendications 1 à 4, **caractérisé par** une version en mohair.
